# FASCICULE DE BREVET EUROPEEN

(11) **EP 0 511 913 B1**
(45) Date de publication et mention de la délivrance du brevet: **05.03.1997**
(21) Numéro de dépôt: 92401208.1
(22) Date de dépôt: 28.04.1992
(51) Int. Cl.: G02B 6/42, H01L 31/00

(54) **Dispositif optoélectronique à guide optique et photodétecteur intégrés**
Optoelektronisches Element mit integriertem optischem Wellenleiter und Detektor
Optoelectronic device wit integrated optical waveguide and photodetector

(30) Priorité: 30.04.1991 FR 9105299
(43) Date de publication de la demande: 04.11.1992
(73) Titulaire: FRANCE TELECOM, 75015 Paris (FR)
(72) Inventeur: Bruno, Adrien, F-91120 Palaiseau (FR)
(74) Mandataire: Signore, Robert

(56) Documents cités:
- EP-A- 0 298 333
- FR-A- 2 226 754
- US-A- 4 857 973
- APPLIED OPTICS. vol. 29, no. 18, 20 Juin 1990, NEW YORK US pages 2781 - 2792; BABA T. ET AL: 'High efficiency light coupling from antiresonant reflecting optical waveguide to integrated photodetector using an antireflecting layer'
- IEEE PHOTONICS TECHNOLOGY LETTERS vol. 2, no. 7, Juillet 1990, NEW YORK ,US pages 496 - 498; DERI R.J. ET AL: 'Integrated waveguide/photodiodes with large bandwidth and high external quantum efficiency'

## Description

La présente invention a pour objet un dispositif optoélectronique à guide optique et photodétecteur intégrés.

Elle trouve une application en optoélectronique, et notamment en télécommunications optiques où le dispositif de l'invention peut constituer le récepteur optique d'un circuit de réception hétérodyne.

Le dispositif de l'invention peut être utilisé également dans des interconnexions optiques entre "puces" électroniques rapides à haut degré d'intégration ou entre ordinateurs, ou à l'intérieur d'ordinateurs.

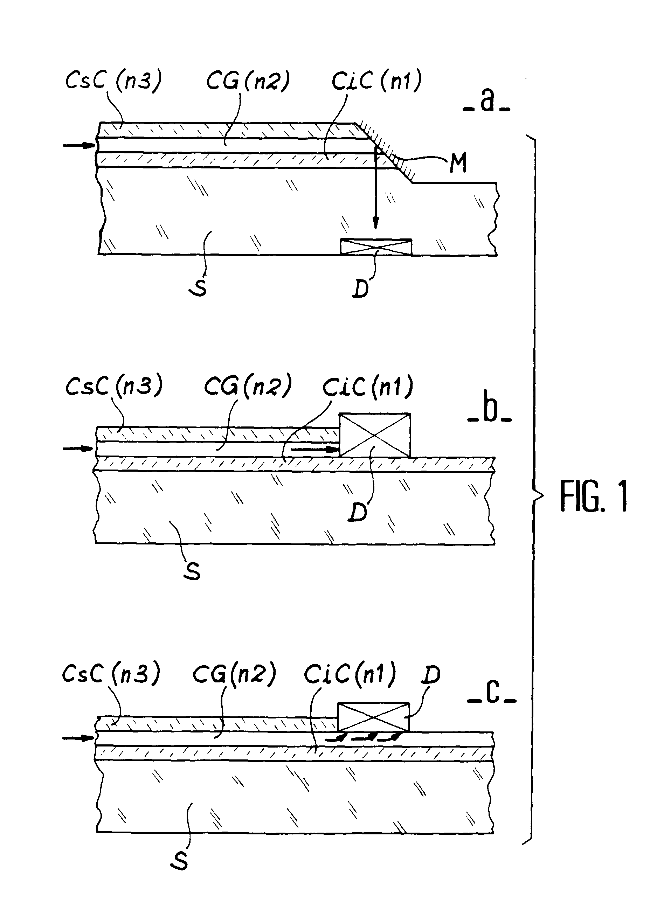

Un dispositif optoélectronique à guide optique et photodétecteur intégrés est représenté sur la figure 1, sous trois modes de réalisation connus légèrement différents. Dans tous ces modes, le dispositif comprend, sur un substrat semiconducteur S, successivement : une première couche inférieure de confinement CiC en un premier matériau ayant un premier indice (n1), une deuxième couche guide CG en un deuxième matériau ayant un deuxième indice (n2) supérieur au premier (n1), une troisième couche supérieure de confinement CsC en un troisième matériau ayant un troisième indice (n3) inférieur au second (n2).

Cette structure se complète par un détecteur D placé en différents endroits selon les modes de réalisation, soit à la partie inférieure du substrat (partie a de la figure 1), un miroir M à 45° renvoyant la lumière venant de la couche guide vers le bas, soit à l'extrémité de la couche guide (partie b), soit enfin au-dessus de la couche guide (partie c) pour un fonctionnement par onde évanescente.

Le dispositif de la présente invention se rapporte au troisième mode de réalisation. C'est donc lui qui sera plus spécialement décrit dans la suite.

Un dispositif guide-détecteur intégré à couplage par onde évanescente est décrit par exemple dans l'article de R.J. DERI et al. intitulé : "Integrated Waveguide/Photodiodes with Vertical Impedance Matching", publié dans "Proceedings of the 1989 IEDM", Washington D.C., Décembre 1989.

Bien que donnant satisfaction à certains égards, tous les dispositifs à couplage par onde évanescente présentent un inconvénient qui est de nécessiter une grande longueur pour le détecteur, afin d'obtenir une absorption totale du rayonnement optique. Or, cette nécessité va à l'encontre d'un des buts recherchés qui est de diminuer le temps de réponse du dispositif, ce qui conduirait plutôt à réduire la surface du détecteur et donc sa longueur.

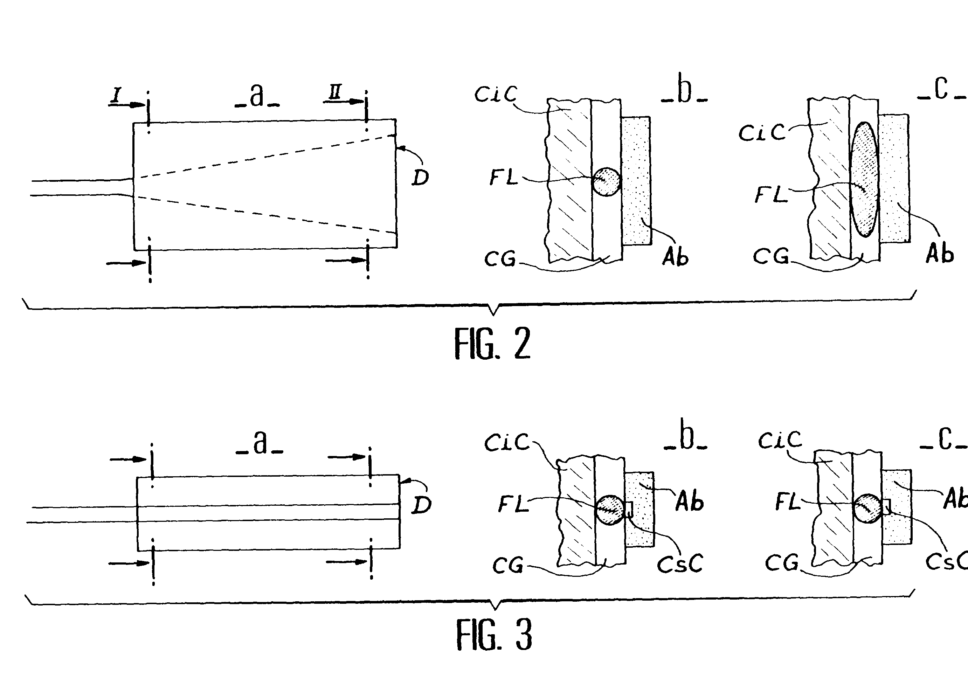

Pour mieux comprendre l'origine de ce problème et les quelques solutions déjà proposées dans l'art antérieur, on peut se reporter aux figures 2 et 3 annexées où deux modes de réalisation connus sont représentés de manière plus détaillée.

Sur ces figures, la partie a est une vue de dessus, la partie b une coupe à l'entrée du détecteur et la partie c une coupe à la sortie du détecteur.

La tache circulaire ou allongée FL représente une section du faisceau lumineux se propageant dans le dispositif.

Les dispositifs les moins absorbants présentent, entre la couche guidante CG et le matériau absorbant Ab, une couche supérieure de confinement CsC en forme de guide pour maintenir le confinement transversal sur une bande d'environ 3 µm (voir figure 3).

Mais la séparation entre le guide et l'absorbant diminue l'absorption par évanescence.

Une structure de ce type est décrite par J.A. CAVAILLES et al. dans l'article intitulé "Integration of Detectors with GaInAsP/InP Carrier Depletion Optical Switches", publié dans "Electronics Letters", 11 octobre 1990, vol. 26, n° 21, P. 1783.

Par ailleurs, M.C. AMMAN, dans un article intitulé "Analysis of a PIN Photodiode with Integrated Waveguide", publié dans Electronics Letters, 13 août 1987, vol. 23, n° 17, P. 895, a cherché l'épaisseur optimale de l'absorbant conduisant à un maximum d'absorption.

Mais cette contrainte rend technologiquement difficile la réalisation du détecteur et de toute façon ne modifie que d'un facteur 2 le coefficient d'absorption.

Un autre problème posé par ces dispositifs est lié à la largeur du détecteur, c'est-à-dire à la dimension perpendiculaire au guide (dimension visible sur les parties b et c des figures 2 et 3). On peut distinguer deux types de détecteurs selon que la largeur est importante (figure 2) ou faible (figure 3). Les détecteurs larges sont utilisés pour éviter les pertes latérales dues à l'élargissement naturel du faisceau. Par exemple, une largeur de 32 µm est utilisée par R.J. DERI et al., cités précédemment, pour des largeurs de guide de 5 à 7 µm. Dans ce cas, sur 190 µm de longueur de détecteur, le faisceau s'élargit et passe de 7 µm à l'entrée du détecteur à 15 µm en sortie, comme représenté sur les parties b et c de la figure 2. Ainsi, la largeur du détecteur devra être supérieure à 20 µm pour tout absorber.

Une largeur faible de 3 µm (sur une longueur de 100 µm) a été utilisée par J.A. CAVAILLES et al., cités précédemment, avec un faisceau guidé latéralement (donc sans élargissement) par une couche ruban d'InP gravé de 0,2 µm d'épaisseur au-dessus de la couche guide (voir parties b et c de la figure 3). Mais, comme déjà souligné, la couche supérieure de confinement d'InP, entre l'absorbant et le guide, affaiblit l'absorption.

R.J. DERI et al., déjà cités, proposent de raccourcir la longueur d'absorption en introduisant une couche antireflet entre la couche guide CG et l'absorbant Ab. L'indice et l'épaisseur de cette couche doivent être choisis de manière à diminuer la réflexion à l'interface couche guide/couche absorbante. En prenant 3,162 pour indice du guide et 3,53 pour indice de l'absorbant, un bon choix d'indice consiste à prendre une valeur intermédiaire par exemple 3,22. La valeur maximale de l'absorption correspond à une épaisseur de la couche antireflet comprise entre 0,5 et 0,6 µm. La valeur choisie par R.J. DERI et al. est de 0,55 µm.

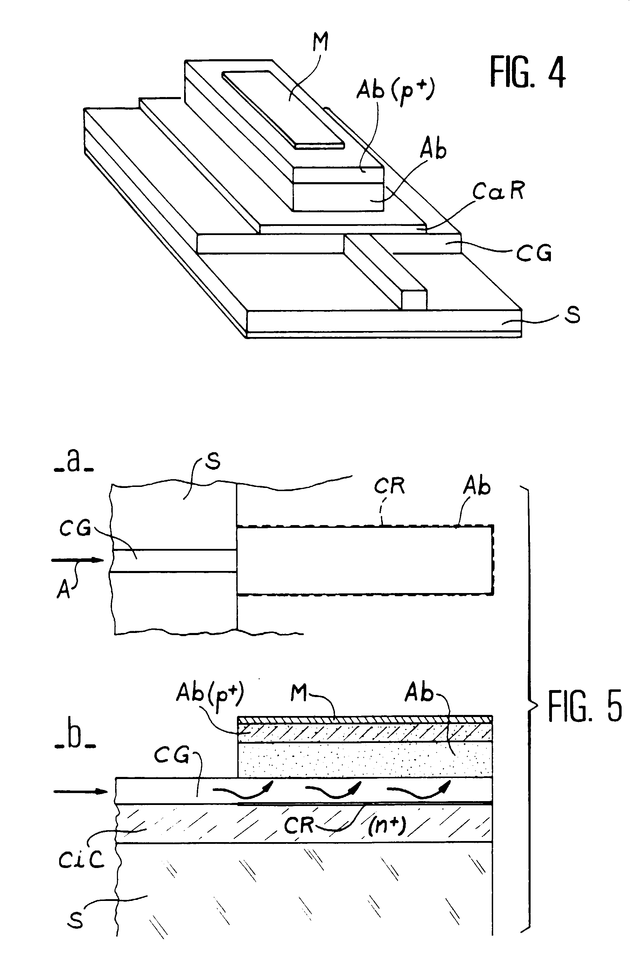

La structure présente alors l'allure illustrée sur la figure 4 où la couche antireflet porte la référence CaR.

Pour une épaisseur donnée de la couche antireflet, un calcul simple d'absorption donne 90% d'absorption sur une longueur de 190 µm en accord avec la valeur choisie expérimentalement par R.J. DERI et al. Mais cette couche augmente l'épaisseur de la zone intrinsèque et donc augmente le temps de transit des porteurs de charge créés par le faisceau absorbé. Seule une diode photoconductrice ou une diode M.S.M. permet de réduire le temps de réponse, puisque le champ électrique dans ce cas est appliqué sur la surface.

Bien que la longueur du détecteur soit diminuée par l'utilisation de cette couche antireflet, la surface du détecteur reste donc relativement importante.

L'article de BABA T. et al. publié dans Applied Optics, vol. 29, n°18, 20 juin 1990, pp. 2781-2792 décrit une structure de guidage intégrée avec un photodetecteur situé dans le substrat et préconise l'utilisation d'une couche antireflet entre la structure et le photodétecteur.

Le document EP-A-0 298 333 décrit un dispositif de détection de gaz ou d'ions dans lequel un photodétecteur est disposé de part et d'autre d'une structure de guidage optique, ce photodétecteur comprenant deux électrodes métalliques pouvant servir de miroirs.

Le document US-A-4,857,973 décrit un dispositif de guidage avec un photodétecteur intégré comprenant une barrière SCHOTTKY.

Le but de l'invention est justement de remédier à tous ces inconvénients liés à la plus ou moins grande absorption et à la plus ou moins grande rapidité de détection. A cette fin, l'invention propose un dispositif à guide optique et photodétecteur intégrés qui est conçu pour conduire à une absorption complète de la lumière et pour présenter un temps de réponse réduit.

L'invention a pour objet un dispositif optoélectronique à guide optique et à photodétecteur intégrés, tel que défini à la revendication 1.

On voit ainsi que le résultat recherché est obtenu par l'utilisation d'une couche dite réfléchissante insérée entre la couche inférieure de confinement et la couche guide. Cette couche est disposée sous la couche absorbante. Elle est en un matériau ayant un indice de réfraction inférieur à l'indice de réfraction de la couche inférieure de confinement.

Selon un premier mode de réalisation, la couche réfléchissante est située dans le guide et à la partie inférieure de celui-ci.

Selon un second mode de réalisation, la couche réfléchissante est située dans la couche inférieure de confinement et à la partie supérieure de celle-ci.

De toute façon, les caractéristiques et avantages de l'invention apparaîtront mieux à la lumière de la description qui va suivre. Cette description porte sur des exemples donnés à titre explicatif et nullement limitatif et se réfère à des dessins annexés sur lesquels :
- la figure 1, (parties a, b et c), déjà décrite, montre en coupe trois variantes connues d'un dispositif optoélectronique à guide optique et photodétecteur intégrés ;
- la figure 2 (parties a, b et c), déjà décrite, montre un mode de réalisation connu d'un dispositif à onde évanescente à élargissement du faisceau ;
- la figure 3 (parties a, b et c), déjà décrite, montre un autre mode de réalisation connu d'un dispositif à onde évanescente sans élargissement du faisceau,
- la figure 4, déjà décrite, montre un dispositif connu à couche d'adaptation antireflet ;
- la figure 5 (parties a et b) montre en vue de dessus et en coupe un dispositif conforme à l'invention ;
- la figure 6 illustre deux modes particuliers de réalisation correspondant respectivement à une couche guide épaisse ou mince ;

On voit, sur la figure 5, un dispositif conforme à l'invention, en vue de dessus sur la partie a, et en coupe sur la partie b. En plus des moyens déjà décrits (substrat S, couche inférieure de confinement CiC, couche guide CG, couche absorbante Ab), le dispositif comprend une couche dite réfléchissante CR disposée à l'interface couche guide CG-couche inférieure de confinement CiC. La couche CR peut être dopée n⁺.

Accessoirement, on observera que, dans la variante illustrée, il n'y a pas de couche supérieure de confinement. Par ailleurs, l'absorbant Ab, en partie dopé p⁺ (Zn) sur une épaisseur de 0,5 µm environ en surface, est recouvert d'une couche métallique M qui constitue la sortie électrique du détecteur.

L'invention s'applique aussi bien aux cas des couches guide de faible épaisseur qu'aux cas des couches guide de forte épaisseur. La différence porte essentiellement sur les longueurs d'absorption. Par exemple, dans l'art antérieur, une absorption de 90% sur 50 µm est rapportée pour une couche guide d'épaisseur 0,9 µm et R.J. DERI et al., déjà cités, décrivent un détecteur de longueur 190 µm pour la même absorption avec un guide de 3,5 µm d'épaisseur.

La longueur d'absorption est plus courte sur un guide de faible épaisseur. Les guides épais monomodes sont obtenus en utilisant une faible différence d'indice entre l'indice de la couche guide et l'indice des couches de confinement. Dans l'invention, on utilise dans ce cas, avec une propagation à la longueur d'onde de 1,5 µm par exemple, une couche guide d'InGaAsP d'indice 3,38, et pour la couche inférieure de confinement une couche d'InGaAsP d'indice 3,37 (légèrement inférieur) ; l'air est utilisé comme matériau de confinement supérieur. Pour être monomodale, la couche guide doit avoir une épaisseur d'environ 3 µm.

Les guides monomodes de faible épaisseur sont obtenus en utilisant une différence d'indice importante entre l'indice de la couche guide et l'indice des couches de confinement. Dans l'invention, on utilise pour la couche guide, par exemple, une couche de quaternaire InGaAsP qui, pour une certaine concentration de ces composants, possède un indice de 3,46. Pour les couches de confinement, on utilise des couches d'InGaAsP d'indice 3,354. Le guide est monomode pour une épaisseur inférieure à 0,9 µm.

Dans les deux cas, le matériau ternaire GaInAs sera utilisé comme matériau absorbant de détection et placé au-dessus du guide. Pour permettre ce positionnement, dans le cas des faibles épaisseurs, la couche supérieure de confinement est gravée jusqu'au guide.

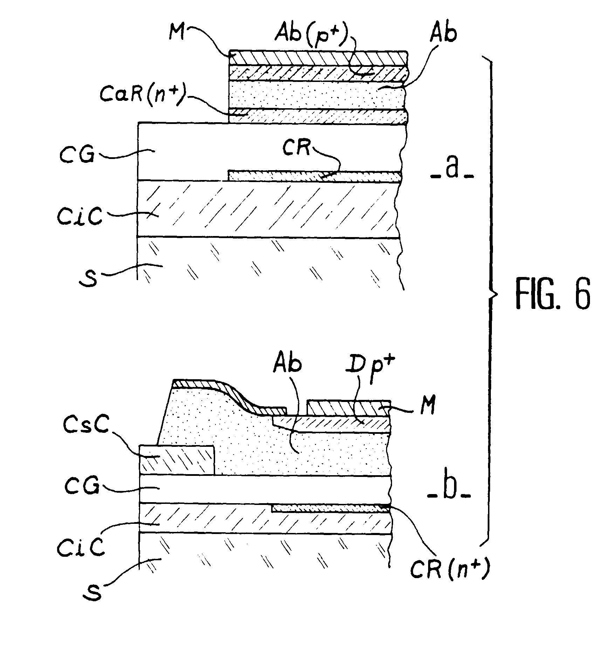

Ces deux modes de réalisation (couche épaisse-couche mince) sont illustrés en coupe sur la figure 6 (parties a et b). Sur la partie a, la couche réfléchissante CR est située dans la couche guide CG, à la partie inférieure de celle-ci. Sur la partie b la couche réfléchissante CR est située dans la couche inférieure de confinement CiC et à la partie supérieure de celle-ci. La couche réfléchissante peut être placée soit comme sur la figure a soit comme sur la figure b, pour les deux modes de réalisation.

La couche réfléchissante CR doit avoir un indice inférieur à l'indice des couches de confinement, Pour le cas des guides de grande épaisseur, on peut partir de guide réalisé en quaternaire GaInAsP, par exemple, d'indice proche 3,38 et 3,37, c'est-à-dire possédant une bande interdite autour de 1,3 µm pour une épaisseur de guide de 3 µm. Dans ce cas, on peut choisir une couche réfléchissante d'indice 3,17 bien inférieur. La réflexion à l'interface est dans ce cas supérieure à la valeur qu'elle prend sans cette couche. Ainsi, la lumière est rejetée vers la couche d'absorption Ab. La longueur d'absorption est réduite de deux fois dans cet exemple.

L'action de la couche réfléchissante CR peut être renforcée par l'addition d'une couche antireflet placée au-dessus de la couche guide, sous l'absorbant (comme décrit par R.J. DERI et al. déjà cités). Cette couche référencée CaR(n+) sur la partie a de la figure 6 permet de réduire la réflectivité de l'interface guide-absorbant, donc de faciliter le passage de la lumière dans le matériau absorbant. La combinaison de cette couche antireflet et de la couche réfléchissante selon la présente invention permet de diminuer d'environ cinq fois la longueur d'absorption.

L'absorption pour le guide d'épaisseur 0,9 µm est deux fois plus importante avec la couche réfléchissante. Sans cette couche, en couplage évanescent, l'absorption est de environ 1000 cm⁻¹. Elle atteint 2000 cm⁻¹ pour une épaisseur supérieure à environ 0,4 µm de couche InP d'indice 3,17 (inférieur à l'indice de la couche inférieure de confinement égal à 3,38).

L'épaisseur n'est pas critique, l'absorption restant constante dans cette zone, ce qui facilite la réalisation de la structure. Ainsi, obtient-on une longueur d'absorption très courte de 23 µm pour 99% d'absorption au lieu de 46 µm.

La couche réfléchissante réduit l'élargissement naturel du faisceau en diminuant la longueur d'absorption. Pour une absorption beaucoup plus complète (99%), dans le cas du guide d'épaisseur 3 µm, avec une couche antireflet, la longueur de détection est de 250 µm et sa largeur, en tenant compte de l'élargissement, est au minimum de 30 µm. Ces valeurs se réduisent à 135 µm pour la longueur et 15 µm pour la largeur en utilisant une couche réfléchissante selon la présente invention, qui augmente l'absorption. Ainsi, un facteur 4 de réduction est obtenu pour la surface du détecteur pour 99% d'absorption sans couche supérieure antireflet.

Pour mettre en oeuvre la présente invention, trois types de détecteurs peuvent être utilisés : la photodiode PIN, le photoconducteur, et le photodétecteur M.S.M. Les deux derniers ont une configuration d'électrodes en surface, le premier une configuration en volume.

Pour la diode PIN, le contact p est obtenu par diffusion et le contact n⁺ par dopage pendant l'épitaxie de la couche réfléchissante (voir partie b de la figure 5). Ainsi, la zone intrinsèque est constituée uniquement du matériau absorbant (et de la couche guide si la couche antireflet n'est pas utilisée) ce qui permet un transit rapide des porteurs de charge. Le contact sur la couche n⁺ est obtenu en réalisant, à proximité du détecteur, un trou jusqu'à la couche dopée n⁺.

Ainsi, la configuration PIN-guide avec une couche guide de grande épaisseur et une surface détectrice de 135x15µm, avec une couche antireflet dopée n⁺ et une couche réfléchissante sous le guide, permet un fonctionnement à une fréquence supérieure à 20GHz pour une absorption de 99% avec une épaisseur de ternaire de 1,7 µm.

Comme déjà précisé, l'invention s'applique à tous les matériaux permettant d'intégrer un guide optique et un détecteur. La seule condition à respecter est que la couche réfléchissante ait un indice inférieur à l'indice de la couche de confinement. A partir des indices de la couche guide, de la couche réfléchissante et de la couche inférieure de confinement, il est possible de déterminer l'épaisseur de la couche réfléchissante la mieux adaptée, pour augmenter au mieux la réflectivité à l'interface couche guide-couche inférieure de confinement.

La couche réfléchissante est un ruban dont la longueur est sensiblement celle du détecteur et dont la largeur dépend de l'expansion du faisceau. La largeur du ruban peut être supérieure à cette valeur si la structure nécessite un élargissement entre le guide et le détecteur pour réduire l'intensité optique par unité de surface atteignant le détecteur. L'intensité doit être réduite pour éviter la saturation du détecteur, surtout dans les structures utilisant des guides de faibles épaisseurs.

Pour ce qui est de la réalisation du dispositif de l'invention, elle se divise en trois étapes : d'abord, réalisation de la couche réfléchissante en forme de ruban sur le substrat, puis dépôt d'une couche guide et de la couche antireflet et, enfin, dépôt d'une couche de matériau absorbant épitaxiée pour la réalisation du détecteur.

Dans l'exemple des guides d'épaisseur importante, la couche inférieure de confinement peut être en GaInAsP. Elle est déposée sur un substrat d'InP avec, dans la zone détectrice, une couche réfléchissante en InP d'épaisseur supérieure à 0,4 µm environ. Cette couche est suivie d'une couche de quaternaire en GaInAsP d'épaisseur 3 µm. Le matériau GaInAsP, avec une bande interdite de 1,3 µm peut convenir. Il jouera le rôle de guide grâce à son indice plus important. Une couche antireflet en GaInAsP d'indice intermédiaire entre celui de l'absorbant et celui du guide est placé au-dessus de la couche guide.

Pour terminer, une couche absorbante en GaInAs est déposée, suivie d'une couche en GaInAs dopé avec du zinc. Le GaInAs est gravé par attaque humide ou sèche, de même que la couche antireflet. Cette gravure permet de réaliser une mésa rectangulaire de dimensions supérieures à celle du détecteur. Ainsi, la diode PIN photoconductrice est réalisée grâce à la couche supérieure en GaInAs pour le contact p⁺ et par dopage au soufre de la couche antireflet pour le contact n⁺. La zone intermédiaire (entre n⁺ et p⁺) est la zone intrinsèque qui doit être réduite à son minimum pour diminuer le temps de transit des porteurs.

Classiquement, la couche dopé n+ est placée au niveau du substrat et la zone intrinsèque contient la couche inférieure de confinement, la couche guide, l'absorbant, ce qui augmente de façon considérable le temps de transit des porteurs de charge. L'épaisseur de l'absorbant doit être supérieure à 1 µm pour être efficace. Entre 1 µm et 2 µm de zone intrinsèque, les fréquences de fonctionnement sont comprises entre 20 et 50GHz environ.

Pour un photoconducteur ou une diode M.S.M., les électrodes se trouvent en surface, et il n'est plus nécessaire de doper la couche antireflet et de rajouter une couche dopée p⁺. Le guide est un ruban réalisé par gravure de la couche guide en InP de 3 µm d'épaisseur pour permettre le confinement latéral.

Dans le cas de la figure 6, les guides sont réalisés par dépôt d'une couche guide et d'une couche supérieure de confinement sur la structure contenant la couche réfléchissante et par gravure de la couche supérieure de confinement. La gravure du guide est effectuée en même temps que la gravure en bout de guide de la couche de confinement pour positionner le détecteur. L'épaisseur de la couche supérieure de confinement doit être la plus faible possible pour faciliter la reprise d'épitaxie sur la marche. Un choix minimum de 0,5 µm d'InP s'impose pour éviter l'absorption avant que le faisceau n'atteigne le détecteur. Dans cette structure, la couche guide n'est pas gravée.

La deuxième étape consiste à réaliser une reprise d'épitaxie du matériau absorbant constituant le détecteur, soit par EOM (épitaxie par organo-métallique), soit par EJM (épitaxie par jet moléculaire). Cette reprise peut être localisée ou totale. Dans le dernier cas le retrait du matériau absorbant au-dessus des guides est nécessaire pour éviter les pertes par absorption au niveau des guides.

Pour limiter les fuites de courant, le détecteur doit être placé sur une surface plane. Pour cela, il doit être éloigné de la marche en bout de guide d'environ 1 µm. La longueur de cette zone intermédiaire perturbée est minimisée par l'utilisation du couplage évanescent, qui facilite la planarisation de la reprise grâce à une plus faible marche en bout de guide. Dans ce cas, il est judicieux, pour éviter les décalages entre absorption et détection, de placer la couche réfléchissante dans la zone détectrice pour amplifier l'absorption au niveau du détecteur.

Ces considérations permettent l'utilisation de l'EJM ou de l'EOM pour la reprise d'épitaxie, bien que non planaire, contrairement à l'EPL (épitaxie en phase liquide). Dans ce cas, la réalisation par une seule technique d'épitaxie, soit l'EJM, soit l'EOM, est possible.

Il faut observer enfin que le dispositif de l'invention peut être utilisé comme sonde optique destinée à prélever une partie d'un faisceau optique circulant dans le guide. La longueur du détecteur est alors réduite à une valeur inférieure à celle qui conduirait à une absorption totale. Le faisceau optique, pendant l'absorption partielle, reste toujours guidé par la couche réfléchissante placée sous le guide et peut donc être utilisé au delà dans le reste du circuit.

Naturellement, dans tout ce qui précède, la couche réfléchissante CR peut être constituée par un ensemble de couches d'indices différents.

## Revendications

1. Dispositif optoélectronique à guide optique et à photodétecteur intégrés comprenant, successivement, sur un même substrat semiconducteur (S), un guide optique constitué par une première couche dite couche inférieure de confinement (CiC) en un premier matériau ayant un premier indice de réfraction n1, une deuxième couche dite couche guide (CG) en un deuxième matériau ayant un deuxième indice de réfraction n2 supérieur au premier indice n1, éventuellement une troisième couche dite couche supérieure de confinement (CsG) en un troisième matériau ayant un troisième indice de réfraction n3 inférieur au second indice n2; et un photodétecteur comprenant notamment une couche absorbante (Ab) d'extension localisée, en un quatrième matériau ayant un quatrième indice de réfraction n4, ladite couche absorbante d'extension localisée étant disposée sur ledit guide optique et étant apte à absorber le rayonnement provenant de la couche guide (CG) par évanescence, ce dispositif étant caractérisé par le fait qu'il comprend en outre une couche additionnelle d'extension également localisée, dite couche réfléchissante (CR), insérée entre la couche inférieure de confinement (CiC) et la couche guide (CG) et s'étendant au dessous de la couche absorbante (Ab), cette couche additonnelle (CR), étant en un cinquième matériau ayant un cinquième indice de réfraction n5 inférieur au premier indice n1 de la couche inférieure de confinement (CiC), de façon à rejeter le rayonnement guidé vers la couche absorbante.

2. Dispositif selon la revendication 1, caractérisé par le fait que la couche réfléchissante (CR) est située dans la couche guide (CG) et à la partie inférieure de celle-ci.

3. Dispositif selon la revendication 1, caractérisé par le fait que la couche réfléchissante (CR) est située dans la couche inférieure de confinement (CiC) et à la partie supérieure de celle-ci.

4. Dispositif selon la revendication 1, caractérisé par le fait que la couche réfléchissante (CR) est gravée transversalement pour former un ruban de largeur au moins égale à la largeur de la couche absorbante (Ab).

5. Dispositif selon la revendication 1, caractérisé par le fait que la couche réfléchissante (CR) a une épaisseur supérieure à 0,4 µm.

6. Dispositif selon la revendication 1, caractérisé par le fait que la couche réfléchissante (CR) est constituée de plusieurs couches d'indices différents.

7. Dispositif selon la revendication 1, caractérisé par le fait que :
- le premier matériau de la couche inférieure de confinement (CiC) est en GaInAsP,
- le deuxième matériau de la couche guide (CG) est en GaInAsP, l'épaisseur de cette couche guide étant voisine de 3 µm,
- la couche supérieure de confinement (CsC) est formée par l'air ambiant,
- le cinquième matériau constituant la couche réfléchissante (CR) est en InP.

8. Dispositif selon la revendication 1, caractérisé par le fait que :
- le premier matériau constituant la couche inférieure de confinement (CiC) est en InGaAsP,
- le deuxième matériau constituant la couche guide (CG) est en alliage quaternaire InGaAsP, l'épaisseur de cette couche étant de l'ordre de 0,9 µm,
- le quatrième matériau constituant la couche d'absorption (Ab) est en alliage ternaire GaInAs,
- le cinquième matériau constituant la couche réfléchissante (CR) est en alliage quaternaire InP.

9. Dispositif selon la revendication 1, caractérisé par le fait qu'il comprend en outre une couche antireflet (CaR) insérée entre la couche guide (CG) et la couche absorbante (Ab).

10. Dispositif selon la revendication 9, caractérisé par le fait que le matériau constituant la couche antireflet (CaR) est en alliage quaternaire GaInAsP.

11. Dispositif selon la revendication 9, caractérisé par le fait que le matériau constituant la couche antireflet (CaR) peut être dopé n⁺ pour le contact n avec une diode PIN constituant le photodétecteur.

## Patentansprüche

1. Optoelektronische Vorrichtung mit integriertem optischem Wellenleiter und Detektor, nacheinander auf demselben Halbleitersubstrat (S) umfassend: einen Lichtwellenleiter, gebildet durch eine erste, untere Einschließungsschicht genannte Schicht (CiC) aus einem ersten Material mit einer ersten Brechzahl n1, eine zweite, Leiterschicht genannte Schicht (CG) aus einem zweiten Material mit einer zweiten Brechzahl n2, höher als die erste Brechzahl n1, eventuell eine dritte, obere Einschließungsschicht (CsC) aus einem dritten Material mit einer dritten Brechzahl n3, kleiner als die zweite Brechzahl n2; und einen Photodetektor, vor allem eine absorbierende Schicht (Ab) lokalisierter Ausdehnung aus einem vierten Material mit einer vierten Brechzahl n4 umfassend, wobei diese Schicht lokalisierter Ausdehnung auf dem genannten Lichtwellenleiter angeordnet ist und fähig ist, durch Dämpfung die von der Leiterschicht (CG) stammende Strahlung zu absorbieren, wobei diese Vorrichtung
**dadurch gekennzeichnet** ist, daß sie außerdem eine zusätzliche Schicht ebenfalls lokalisierter Ausdehnung umfaßt, Reflexionsschicht (CR) genannt, eingefügt zwischen die untere Einschliessungsschicht (CiC) und die Leiterschicht (CG), die sich unter der absorbierenden Schicht (Ab) erstreckt, wobei diese zusätzliche Schicht (CR) aus einem fünften Material mit einer fünften Brechzahl n5 ist, die kleiner ist als die erste Brechzahl nl der unteren Einschließungsschicht (CiC), um die in Richtung absorbierende Schicht geleitete Strahlung zurückzuwerfen.

2. Vorrichtung nach Anspruch 1, dadurch gekennzeichnet, daß die reflektierende Schicht (CR) sich in der Leiterschicht (CG) befindet und auf deren unterem Teil.

3. Vorrichtung nach Anspruch 1, dadurch gekennzeichnet, daß die reflektierende Schicht (CR) sich in der unteren Einschliessungsschicht (CiC) befindet und auf deren oberen Teil.

4. Vorrichtung nach Anspruch 1, dadurch gekennzeichnet, daß die reflektierende Schicht (CR) quer geätzt ist, um einen Streifen einer Breite wenigstens gleich der Breite der Absorptionsschicht (Ab) zu bilden.

5. Vorrichtung nach Anspruch 1, dadurch gekennzeichnet, daß die reflektierende Schicht (CR) eine Dicke größer als 0,4µm hat.

6. Vorrichtung nach Anspruch 1, dadurch gekennzeichnet, daß die reflektierende Schicht (CR) gebildet wird durch mehrere Schichten mit unterschiedlichen Brechzahlen.

7. Vorrichtung nach Anspruch 1, dadurch gekennzeichnet, daß:
- das erste Material der unteren Einschließungsschicht (CiC) aus GaInAsP ist,
- das zweite Material der Leiterschicht (CG) aus GaINAsP ist, wobei die Dicke dieser Leiterschicht ungefähr 3µm beträgt,
- die obere Einschließungsschicht (CsC) durch die Umgebungsluft gebildet wird,
- das fünfte, die reflektierende Schicht (CR) bildende Material aus InP ist.

8. Vorrichtung nach Anspruch 1, dadurch gekennzeichnet, daß:
- das erste, die untere Einschließungsschicht (CiC) bildende Material aus InGaAsP ist,
- das zweite, die Leiterschicht (CG) bildende Material aus einer quarternären InGaAsP-Legierung ist, wobei die Dicke dieser Schicht die Größenordnung 0,9µm aufweist,
- das vierte, die Absorptionsschicht (Ab) bildende Material aus einer ternären GaInAs-Legierung ist,
- das fünfte, die reflektierende Schicht (CR) bildende Material aus einer quarternären InP-Legierung ist.

9. Vorrichtung nach Anspruch 1, dadurch gekennzeichnet, daß sie außerdem eine Antireflexschicht (CaR) umfaßt, eingefügt zwischen die Leiterschicht (CG) und die Absorptionsschicht (Ab).

10. Vorrichtung nach Anspruch 9, dadurch gekennzeichnet, daß das die Antireflexschicht (CaR) bildende Material aus einer quarternären GaInAsP-Legierung ist.

11. Vorrichtung nach Anspruch 9, dadurch gekennzeichnet, daß das die Antireflexschicht (CaR) bildende Material n⁺-dotiert sein kann für den n-Kontakt bei einer den Photodetektor bildenden PIN-Diode.

## Claims

1. Optoelectronic device having an integrated optical guide and photodetector successively comprising on the same semiconductor substrate (S), an optical guide constituted by a first, lower confinement layer (CiC) made from a first material having a first refractive index (n1), a second, guide layer (CG) made from a second material having a second refractive index (n2) higher than the first index (n1), optionally a third, upper confinement layer (CsG) of a third material having a third refractive index (n3) lower than the second index (n2) and a photodetector more particularly comprising a localized extension absorption layer (Ab) of a fourth material having a fourth refractive index (n4), said localized extension absorbent layer being located on said optical guide and being able to absorb the radiation from the guide layer (CG) by evanescence, said device being characterized in that it also comprises an additional localized extension layer called the reflecting layer (CR), inserted between the lower confinement layer (CiC) and the guide layer (CG) and extending below the absorption layer (Ab), said additional layer (CR) being of a fifth material having a fifth refractive index (n5) lower than the first index (n1) of the lower confinement layer (CiC), so as to discharge the guided radiation towards the absorption layer.

2. Device according to claim 1, characterized in that the reflecting layer (CR) is located in the lower part of the guide layer (CG).

3. Device according to claim 1, characterized in that the reflecting layer (CR) is located in the upper part of the lower confinement layer (CiC).

4. Device according to claim 1, characterized in that the reflecting layer (CR) is transversely etched to form a ribbon having a width at least equal to the width of absorbent layer (Ab).

5. Device according to claim 1, characterized in that the reflecting layer (CR) has a thickness exceeding 0.4 µm.

6. Device according to claim 1, characterized in that the reflecting layer (CR) is constituted by several layers having different indices.

7. Device according to claim 1, characterized in that the first material of the lower confinement layer (CiC) is GaInAsP, the second material of the guide layer (CG) is GaInAsP, the thickness of said guide layer being close to 3 µm, the upper confinement layer (CsC) being formed by the ambient air and the fifth material constituting the reflecting layer (CR) is of InP.

8. Device according to claim 1, characterized in that the first material constituting the lower confinement layer (CiC) is of InGaAsP. The second material constituting the guide layer (CG) is of quaternary alloy InGaAsP, the thickness of said layer being approximately 0.9 µm, the fourth material constituting the absorption layer (Ab) is of ternary alloy GaInAs and the fifth material constituting the reflecting layer (CR) is of quaternary alloy InP.

9. Device according to claim 1, characterized in that it also comprises an anti-reflection layer (CaR) inserted between the guide layer (CG) and the absorbent layer (Ab).

10. Device according to claim 9, characterized in that the material constituting the anti-reflection layer (CaR) is a quaternary alloy GaInAsP.

11. Device according to claim 9, characterized in that the material constituting the anti-reflection layer (CaR) can be n doped for the n contact with a PIN diode constituting the photodetector.
